# EUROPÄISCHE PATENTSCHRIFT

(11) **EP 2 343 696 B1**
(45) Veröffentlichungstag und Bekanntmachung des Hinweises auf die Patenterteilung: **04.07.2018**
(21) Anmeldenummer: 10015179.4
(22) Anmeldetag: 01.12.2010
(51) Int. Cl.: G09B 23/28

(54) **Simulationssystem für das Training endoskopischer Operationen**
Simulation system for training endoscopic operations
Système de simulation pour l'entraînement d'opérations endoscopiques

(30) Priorität: 23.12.2009 DE 102009060522
(43) Veröffentlichungstag der Anmeldung: 13.07.2011
(73) Patentinhaber: Karl Storz SE & Co. KG, 78532 Tuttlingen (DE)
(72) Erfinder: Glöggler, Bernhard, 78532 Tuttlingen (DE); Speiser, Björn, 78532 Tuttlingen (DE); Hinding, Thomas, 78532 Tuttlingen (DE)
(74) Vertreter: Fugmann, Winfried

(56) Entgegenhaltungen:
- EP-A1- 1 722 346
- WO-A1-02/070980
- US-A1- 2001 016 804

## Beschreibung

Die vorliegende Erfindung betrifft ein Simulationssystem für das Training endoskopischer Operationen, ein flexibles Endoskop, ein endoskopisches Arbeitsinstrument sowie ein Verfahren zur Erfassung einer Bewegung eines endoskopischen Arbeitsinstruments und ein Verfahren für das Training endoskopischer Operationen.

Vorrichtungen und Verfahren der genannten Art sind bekannt. So ist in der Offenlegungsschrift DE 10 2004 046 038 A1 ein virtueller OP-Simulator beschrieben, der insbesondere für das Training endourologischer Eingriffe vorgesehen ist. Im Gegensatz zu chirurgischen oder endoskopischen Trainingsmodellen, bei denen eine reale Nachbildung eines Körperteils bzw. eines körperinneren Hohlraums, in den die Spitze eines Endoskops eingeführt wird, zur Simulation eines chirurgischen bzw. minimal-invasiven Eingriffs genutzt wird, wird bei einem virtuellen Simulator mit den Methoden der "virtual reality" (virtuellen Realität) rechnergestützt ein interaktiv durch den Benutzer beeinflussbares Bild einer virtuellen Umgebung, insbesondere eines Körperhohlraums, erzeugt. Gemäß DE 10 2004 046 038 A1 umfasst der virtuelle OP-Simulator eine Simulationsrechnereinheit zur Erzeugung eines solchen virtuellen endoskopischen Bilds in Echtzeit, ein Instrument, dessen proximaler (d. h. dem Benutzer nahegelegener) Teil dem eines endoskopisch einsetzbaren Instruments, insbesondere eines Resektoskops, nachgebildet ist, und eine Instrumenteneingabeeinheit zur Aufnahme des Instruments. Neben der Darstellung des virtuellen Bilds wird auch die Kraftrückwirkung auf das Instrument bzw. auf eine distal (d. h. benutzerfern) angeordnete Resektionsschlinge berechnet und dem Benutzer vermittelt. Zur Erfassung der Bewegung des Instruments sind in der Instrumenteneingabeeinheit inkrementale Drehgeber vorgesehen, deren Signale zur weiteren Verarbeitung an eine Kontrollsteuereinheit übertragen werden. Das Instrument umfasst ferner einen Schlitten, der durch einen Benutzer in einer Weise bewegt werden kann, die der Betätigung der Resektionsschlinge entspricht. Die Bewegung des Schlittens wird über eine Achse auf ein Linear-Potentiometer übertragen, so dass durch eine Veränderung des Widerstands die Position des Schlittens erfasst werden kann.

In dem Artikel von Samur et al. (http://infoscience.epfl.ch/record/120548/files/Samur_HapticInterface_colonoscopy_Ha ptics08.pdf) wird eine Vorrichtung zur Bewegungsdetektion und Kraftrückkopplung bei einer kolonoskopischen Simulation beschrieben. Dabei wird ein Kolonoskop in eine Vorrichtung eingeführt, innerhalb derer Rollen reibschlüssig am Schaft des Kolonoskops anliegen und eine Kraftrückwirkung auf das Kolonoskop vermitteln. Die Bewegung der Rollen wird durch optische Geber gemessen, um die lineare und rotatorische Bewegung des Schafts zu bestimmen. Die Detektion der Bewegung über reibschlüssig am Schaft anliegende Rollen ist mit einem hohen technischen Aufwand und auf Grund des notwendigen exakten Reibschlusses mit Ungenauigkeiten behaftet.

In der WO 02/070980 A1 wird ein Simulationssystem für bildgesteuerte medizinische Verfahren beschrieben, bei dem ein medizinisches Instrument, beispielsweise ein Katheter oder ein Endoskop, in eine Eingabeeinheit eingesetzt wird, innerhalb derer Positionsgeber bzw. Sensoren zur Verfolgung der vom Benutzer veranlassten Bewegungen des Instruments angeordnet sein können. Als Sensoren kommen dabei insbesondere zwei oder vier inkrementale Positionsgeber oder ein oder mehrere optische Sensoren in Frage.

Bei endoskopischen Eingriffen sind in der Regel Manipulationen des körperinneren Gewebes erforderlich. Hierfür weisen flexible Endoskope üblicherweise mindestens einen innerhalb des in einen Hohlraum einführbaren Schafts verlaufenden Arbeitskanal auf, durch den ein oder mehrere endoskopische Arbeitsinstrumente in den Hohlraum eingeführt werden können. Ein solches endoskopisches Arbeitsinstrument weist einen langerstreckten Schaft auf, der zur Einführung in den Arbeitskanal vorgesehen ist. Ferner kann ein endoskopisches Arbeitsinstrument ein Werkzeug aufweisen, das am distalen Ende des Schafts angeordnet und zur Durchführung der gewünschten Manipulation ausgebildet ist. Zur Betätigung des Werkzeugs kann am proximalen Ende des Schafts ein Betätigungselement vorgesehen sein, über das ein Benutzer die Bewegung des Arbeitsinstruments und die Gewebemanipulation steuern kann.

In einem endoskopischen Simulationssystem ist es deshalb vorteilhaft, auch die Betätigung eines endoskopischen Arbeitsinstruments trainieren zu können. Hierfür ist es notwendig, die Bewegung des Arbeitsinstruments, insbesondere des Schafts, innerhalb des Arbeitskanals des Endoskops erfassen zu können. Die vorgenannten Anordnungen sind jedoch für die Detektion der Bewegung eines flexiblen endoskopischen Arbeitsinstruments innerhalb eines flexiblen Endoskops nicht geeignet.

Aus US 2005/0196739 A1 ist ein endoskopisches Simulationssystem bekannt, das ein für die Simulation speziell angepasstes Trainingsendoskop umfasst, sowie einen Detektor, der die vom Benutzer gesteuerten Bewegungen des distalen Endes eines flexiblen Schafts des Trainingsendoskops erfasst, eine Bilderfassungsvorrichtung, die die Form eines körperinneren Hohlorgans eines Patienten erfasst, und einen Bildprozessor, der aus den erfassten Daten ein virtuelles dreidimensionales Bild des Hohlorgans erzeugt. Das Trainingsendoskop weist einen Eingang auf, durch den ein endoskopisches Arbeitsinstrument in den Schaft des Trainingsendoskops eingesetzt werden kann. Weiterhin ist ein Element zur Detektion der Bewegung des eingesetzten endoskopischen Arbeitsinstruments vorgesehen. Dieses weist eine Kalibrierungs- bzw. Normalisierungsfunktion auf. Hierdurch ist es möglich, einen Startpunkt für das Einsetzen des endoskopischen Arbeitsinstruments in das Bewegungsdetektionselement zu bestimmen, der einer vorgegebenen Position innerhalb des Körpers des Patienten beziehungsweise eines virtuellen Organs entspricht. Die Funktionsweise des Elements zur Detektion der Bewegung des Arbeitsinstruments wird nicht beschrieben. Die Detektion einer rotatorischen Bewegung des Arbeitselements ist nicht vorgesehen.

In EP 1 722 346 A1 ist ein Endoskopie-Simulationssystem offenbart, das ein Testendoskop mit einem drehbaren Kragen umfasst, durch dessen Drehung bei einem realen Endoskop die Steifigkeit des Schafts eingestellt werden könnte. Das Testendoskop umfasst einen Kanal zur Einführung eines Sekundärinstruments, wobei der Grad der Einführung mittels eines Sensors erfasst wird.

Es ist eine Aufgabe der vorliegenden Erfindung, ein Simulationssystem für das Training endoskopischer Operationen, ein flexibles Endoskop und ein endoskopisches Arbeitsinstrument zur Verwendung in einem solchen Simulationssystem sowie ein Verfahren zur Erfassung einer Bewegung eines endoskopischen Arbeitsinstruments und ein Verfahren für das Training endoskopischer Operationen anzugeben, wobei eine einfache und sichere Detektion der Bewegung eines durch einen Arbeitskanal des flexiblen Endoskops einzuführenden Arbeitselements möglich ist.

Diese Aufgabe wird durch ein Simulationssystem mit den Merkmalen gemäß Anspruch 1, durch ein flexibles Endoskop mit den Merkmalen des Anspruchs 9, durch ein endoskopisches Arbeitsinstrument mit den Merkmalen des Anspruchs 10 sowie durch ein Verfahren mit den Merkmalen des Anspruchs 13 und ein Verfahren mit den Merkmalen des Anspruchs 14 gelöst.

Ein erfindungsgemäßes Simulationssystem umfasst eine Endoskopvorrichtung, die in bevorzugter Weise einem proximalen Teil eines klinisch einsetzbaren Endoskops entspricht bzw. diesem nachgebildet ist. Insbesondere kann die Endoskopvorrichtung einen Endoskopkopf aufweisen, der einen Handgriff umfasst, sowie einen Schaft, der zur Einführung in einen körperinneren Hohlraum geeignet oder einem solchen zumindest abschnittsweise nachgebildet ist. Am Endoskopkopf können Handhabungselemente zur Bedienung des Endoskops sowie Versorgungsleitungen, etwa für Insufflation, Spülung, Absaugung und/oder Beleuchtung, bzw. entsprechende Anschlüsse vorgesehen sein. Der Endoskopkopf kann weiterhin einen Anschluss zum Ankoppeln einer Kamera bzw. Leitungen oder Anschlüsse zur Übertragung eines beispielsweise am distalen Ende des Schafts von einer im Endoskop integrierten Kamera aufgenommenen Bildes zu einer Auswertungs- und/oder Wiedergabeeinheit umfassen. Am Endoskopkopf können weitere Bedienelemente, beispielsweise zur Steuerung der Bewegung des distalen Endes des Endoskopschafts, vorhanden sein. Die Endoskopvorrichtung weist ferner mindestens einen Eingang zur Einführung eines endoskopischen Arbeitsinstruments auf. Der Eingang kann beispielsweise am Endoskopkopf angeordnet sein, in bevorzugter Weise im Bereich des distalen Endes des Endoskopkopfs benachbart zum Übergang des Endoskopkopfs in den Schaft. In bevorzugter Weise sind mehrere Eingänge vorgesehen, die beispielsweise in Bezug auf eine Schaftachse einander gegenüberliegend angeordnet sein können.

Ein in den Eingang einzuführendes endoskopisches Arbeitsinstrument weist insbesondere einen langerstreckten flexiblen Schaft auf, der zur Einführung in den Arbeitskanal eines flexiblen Endoskops geeignet ist. Am distalen Ende des Schafts des Arbeitselements kann ein Werkzeug angeordnet sein, beispielsweise eine Zange, eine Schere oder auch eine Koagulationsschlinge, die von einem am proximalen Ende des Arbeitsinstruments angeordneten Bedienelement steuerbar sein kann, beispielsweise mit Hilfe eines Handgriffs.

Zur Einführung des Arbeitsinstruments in den Schaft erfolgt eine Bewegung insbesondere in axialer Richtung, d. h. in Richtung des Schafts des Arbeitsinstruments. Zur weiteren Einführung des Arbeitsinstruments in die Endoskopvorrichtung ist ebenfalls eine axiale Bewegung erforderlich. Die entsprechende translatorische Bewegung kann von einem Benutzer vom proximalen Ende des Arbeitsinstruments her gesteuert werden. Zur Detektion der Bewegung des endoskopischen Arbeitsinstruments ist eine Sensoranordnung vorhanden, die Messwerte über die Bewegung des Arbeitselements erzeugt, die an eine Steuerungseinrichtung übertragen werden.

Die Steuerungseinrichtung ist derart ausgebildet, dass die Messwerte der Bewegung des endoskopischen Arbeitselements bei der Erzeugung eines virtuellen Bildes verwertet werden, das insbesondere eine endoskopische Ansicht eines körperinneren Hohlraums darstellt, in den das distale Ende eines Endoskops eingeführt worden ist. Die Steuerungseinrichtung umfasst insbesondere mindestens einen Prozessor zur Ausführung der hierfür notwendigen Rechenoperationen, wobei eine Vielzahl weiterer Daten und Parameter verwendet werden können. So kann beispielsweise eine Speichereinrichtung vorhanden sein zur Speicherung von Daten über den körperinneren Hohlraum, in dem eine chirurgische Operation stattfinden soll, die mit dem Simulationssystem trainiert werden soll. Diese Daten können ganz oder teilweise patientenspezifisch sein und können auch Daten über den Zugangsweg umfassen, so dass auch das Einführen des distalen Teils eines Endoskops in den körperinneren Hohlraum simuliert werden kann. Ferner können weitere Parameter verarbeitet werden, die beispielsweise den Grad der Einführung des Endoskopschafts in den Hohlraum, die Krümmung des Schafts, die vom Benutzer steuerbare Abwinkelung des distalen Endes, die Betätigung weiterer Bedienelemente, etwa für Spülen, Saugen, Insufflieren oder für die Beleuchtung, darstellen können. Verfahren zur Erzeugung eines derartigen virtuellen Bildes sind unter dem Begriff "virtual reality" (virtuelle Realität) an sich bekannt, ebenso wie Rechnersysteme zur Durchführung solcher Verfahren; hierzu wird insbesondere auf die oben erwähnte DE 10 2004 046 038 A1 verwiesen.

Das von der Steuerungseinrichtung erzeugte, hier als "virtuelles Bild" bezeichnete Bild stellt die Szene dar, die bei Durchführung der entsprechenden endoskopischen Operation mit Hilfe der im Endoskop befindlichen optischen Systeme und einer dem Endoskop zugeordneten Kamera aufgenommen und für einen Benutzer, insbesondere den Arzt, der die chirurgische Operation durchführt, dargestellt würde. Hierzu umfasst das Simulationssystem eine Anzeigeeinrichtung zur Anzeige des von der Steuerungseinrichtung erzeugten virtuellen Bildes, beispielsweise einen Videoschirm, einen Videoprojektor oder eine am Kopf des Benutzers angeordnete Anzeigeeinrichtung (Head-Mounted Display). Das virtuelle Bild wird von der Steuerungseinrichtung bevorzugt in Echtzeit erzeugt und auf der Anzeigeeinrichtung dargestellt, um eine sofortige Rückwirkung der vom Benutzer vorgenommenen Manipulationen und dadurch eine realistische Simulation zu ermöglichen.

Die erfasste Bewegung des endoskopischen Arbeitsinstruments kann beispielsweise derart ausgewertet werden, dass das dem Arbeitsinstrument zugeordnete, am distalen Ende des Schafts angeordnete Werkzeug dargestellt wird, ggf. zusammen mit einem im endoskopischen Bild sichtbaren Teil des Schafts des Arbeitsinstruments, sowie die Bewegungen des Werkzeugs und des Schafts. Dabei können weitere Einflüsse bei der Berechnung des endoskopischen Bilds berücksichtigt werden, wie etwa das Erscheinungsbild des Werkzeugs in Spülflüssigkeit, die durch Blutungen getrübt sein kann, ebenso wie eine Bewegung der Endoskopspitze, die der Benutzer über entsprechende Kontrollelemente steuern kann, oder die vom Benutzer gewählte Orientierung des Endoskopkopfs relativ zu einer Längsachse des Endoskops. Bei Vorhandensein mehrerer Werkzeuge an einem Arbeitsinstrument können die mehreren Werkzeuge dargestellt werden, ebenso bei Einführung mehrerer Arbeitsinstrumente die diesen zugeordneten Werkzeuge und ggf. sichtbaren Schaftabschnitte.

Zur Detektion der Bewegung des endoskopischen Arbeitsinstruments ist erfindungsgemäß eine Sensoranordnung vorgesehen, die mindestens einen optischen Sensor umfasst, der zur Detektion der Bewegung des endoskopischen Arbeitselements mit der Oberfläche des Schafts des Arbeitsinstruments zusammen wirkt. Erfindungsgemäß wird durch eine Lichtquelle, die sowohl die Aussendung von elektromagnetischer Strahlung im sichtbaren und/oder unsichtbaren Wellenlängenbereich ermöglicht, ein Bereich der Oberfläche des Schafts des Arbeitsinstruments beleuchtet und durch einen Sensor die von der Oberfläche reflektierte Strahlung aufgenommen, so dass durch die Bewegung verursachte Veränderungen der Strahlung detektierbar sind. Dies kann beispielsweise anhand der sensierten Veränderung der Oberflächenhelligkeit durch einen einzigen optischen Sensor erfolgen. Hierdurch wird direkt, ohne die Zwischenschaltung mechanischer Mittel, die Bewegung des Schafts des Arbeitsinstruments detektiert. Insbesondere ist eine kontaktlose Verfolgung (Tracking) der Schaftoberfläche möglich. Dadurch kann eine einfache und sichere Detektion der Bewegung des eingesetzten Arbeitsinstruments und damit eine realitätsnahe Simulation der Operationssituation erfolgen. Insbesondere können Fehldetektionen vermieden werden, die bei Sensoren auftreten können, bei denen über einen Reibschluss mechanische Elemente angetrieben werden, deren Bewegung detektiert wird. Ferner sind einfache und kostengünstige optische Sensoren verfügbar, die zudem einen kompakten Aufbau ermöglichen.

Insbesondere kann hierdurch auf einfache und störungsfreie Weise direkt die Bewegung des eingesetzten Arbeitsinstruments relativ zum Endoskop detektiert werden. Die entsprechenden Bewegungsdaten können daher von der Steuerungseinheit direkt verarbeitet werden, um im erzeugten virtuellen Bild das Werkzeug des Arbeitsinstruments in Relation zur Spitze des Endoskops, wo in der Regel das endoskopische Bild aufgenommen wird, darzustellen.

In einem erfindungsgemäßen Simulationssystem kann die Detektierung der Bewegungen mehrerer Arbeitsinstrumente vorgesehen sein. Das Simulationssystem kann auch weitere Komponenten umfassen, beispielsweise Pumpen, eine Lichtquelle oder auch eine Eingabeeinheit zur Erfassung der Bewegung der Endoskopvorrichtung, die zur Simulation der Bewegung eines Endoskops in einer Körperhöhle dient. Die Eingabeeinheit kann in bekannter Weise aufgebaut sein oder einen optischen Sensor umfassen, der zur Detektion der Bewegung der Endoskopvorrichtung mit der Oberfläche eines Schafts der Endoskopvorrichtung zusammenwirkt.

In einer bevorzugten Weiterbildung der Erfindung wird über einen weiteren Sensor eine Betätigung eines am proximalen Ende des Arbeitsinstruments angeordneten Betätigungselements erfasst. Hierdurch kann auch eine entsprechende Aktion des Werkzeugs, wie etwa ein Öffnen oder Schließen eines als Schere oder Zange ausgebildeten Werkzeugs, oder die Erzeugung von Gasblasen in einer Spülflüssigkeit bei Betätigung eines HF-chirurgischen Werkzeugs, dargestellt werden. Dies ermöglicht eine besonders realistische Simulation.

Um das Werkzeug in die für den Einsatz geeignete Position zu bringen, um beispielsweise in einem bestimmten Gewebebereich einen Schnitt in einer bestimmten Richtung anzubringen, ist neben einer Verschiebung in Längsrichtung eine Drehung des Arbeitsinstruments um dessen Längsachse, insbesondere die Achse des Schafts des Arbeitsinstruments, erforderlich. Die entsprechenden translatorischen und rotatorischen Bewegungen des Arbeitsinstruments können vom Benutzer vom proximalen Ende des Arbeitsinstruments her insbesondere durch eine entsprechende translatorische Bewegung bzw. Drehung des Betätigungselements gesteuert werden.

Erfindungsgemäß ist der mindestens eine optische Sensor zur Detektion von translatorischen und rotatorischen Bewegungen des Schafts des Arbeitsinstruments ausgebildet. Da das endoskopische Arbeitsinstrument innerhalb eines Arbeitskanals eines flexiblen Endoskops nur zwei Freiheitsgrade aufweist, kann durch die Detektion der translatorischen und der rotatorischen Bewegung die Bewegung des Arbeitsinstruments innerhalb des Endoskopschafts vollständig beschrieben werden. Bei Verwendung mehrerer Arbeitsinstrumente bzw. von Arbeitsinstrumenten mit mehreren Werkzeugen ist es bevorzugt, die translatorischen und rotatorischen Bewegungen aller Arbeitsinstrumente bzw. Werkzeuge zu erfassen. Die detektierten translatorischen und/oder rotatorischen Bewegungen können von der Steuerungseinrichtung bei der Erzeugung des virtuellen Bildes entsprechend verwertet werden, um translatorische bzw. rotatorische Bewegungen des Werkzeugs bzw. der Werkzeuge darzustellen. Hierdurch ist eine besonders realitätsnahe Simulation möglich. Erfindungsgemäß werden optische abbildende Sensoren zur Erfassung von Bewegungen in zwei Freiheitsgraden verwendet. Sensoren dieser Art sind an sich bekannt und arbeiten insbesondere nach dem Prinzip der Korrelation oder des optischen Flusses. Hierfür werden in zeitlicher Folge Bilder einer beobachteten Oberfläche aufgenommen und jeweils im Vergleich zu einem oder mehreren vorangegangenen Bildern ausgewertet. Durch eine Veränderung der aufeinander folgenden Bilder, insbesondere aus einer Korrelation der Bilder bzw. durch den aus einem Vergleich der Helligkeitsgradienten ermittelten optischen Fluss kann die Bewegung detektiert werden. Weiterhin kann unter Einbeziehung des Zeitabstands der Bilder auch die Größe der Bewegung, d. h. die Geschwindigkeit des Schafts des Arbeitsinstruments relativ zur Sensoranordnung gemessen werden. Dabei kann die axiale Komponente direkt für die Bestimmung der linearen, translatorischen Bewegung des Schafts des Arbeitsinstruments herangezogen werden, während die dazu senkrechte Komponente der Bewegung der Schaftoberfläche mit Hilfe eines bekannten Durchmessers des Schafts des Arbeitsinstruments in eine rotatorische Bewegung umgerechnet werden kann. Schließlich kann durch Zeitintegration oder durch Aufsummierung von Bewegungsinkrementen die zurückgelegte Strecke bzw. der zurückgelegte Winkel gemessen werden. Hierdurch können alle für die Simulation erforderlichen Daten ermittelt werden.

In einer bevorzugten Weiterbildung der Erfindung umfasst die Sensoranordnung mindestens eine LED (lichtemittierende Diode) oder eine Laser-Lichtquelle, insbesondere eine Laserdiode. Hierdurch ist eine einfache und kostengünstige Ausgestaltung, die eine sichere Messwerterfassung ermöglicht, realisierbar. Insbesondere hat eine Laserdiode den Vorteil, dass sich auf einer Vielzahl unterschiedlicher Oberflächen stets ein auswertbares Bild ergibt.

Die Lichtquelle zur Beleuchtung eines Oberflächenbereichs des Schafts des endoskopischen Arbeitsinstruments kann auch derart ausgebildet sein, dass ein Muster auf die Oberfläche projiziert wird. Hierdurch kann ein erhöhter Kontrast und eine sicherere Detektion erreicht werden.

Eine derartige Sensoranordnung kann insbesondere ferner mindestens einen Bildsensor umfassen, sowie Abbildungsmittel, etwa eine Linsenoptik, zur Erzeugung eines Bilds der Oberfläche des Schafts des endoskopischen Arbeitsinstruments auf einem Bildaufnehmer des Bildsensors. Der Bildsensor kann weiterhin elektronische Bauelemente umfassen zur Vorauswertung des vom Bildaufnehmer aufgenommenen Bilds. Mithilfe einer derartigen Anordnung ist eine einfache und sichere Detektion der Bewegung der Oberfläche des Schafts des endoskopischen Instruments in zwei Bewegungsrichtungen möglich. Sensoren dieser Art sind in einfacher, kompakter und kostengünstiger Form erhältlich und werden beispielsweise in optischen Computermäusen verwendet.

Bekannte Verfahren zur Auswertung des in dieser Weise erzeugten Bilds umfassen beispielsweise Methoden zur Bestimmung des optischen Flusses, woraus ein Bewegungsinkrement von einem zum nächsten aufgenommenen Bild des Bildsensors ermittelt und durch Summierung die gesamte zurückgelegte Strecke bestimmt werden kann. Hieraus kann sowohl die Vorschubstrecke des endoskopischen Arbeitsinstruments wie auch der zurückgelegte Drehwinkel bestimmt werden.

In einer bevorzugten Weiterbildung der Erfindung wird ausgehend von einem Nullpunkt der translatorischen Bewegung unter Berücksichtigung der ermittelten Vorschubstrecke, die positiv oder negativ sein kann, und der Länge des Arbeitsinstruments und des Arbeitskanals eines Endoskops, auf das sich die Simulation bezieht, eine aktuelle Position des Arbeitsinstruments bestimmt. Hierdurch ist es möglich, Geschwindigkeit und Position des Werkzeugs des Arbeitselements im erzeugten virtuellen Bild richtig darzustellen. Ebenso kann bei Arbeitsinstrumenten, die eine vorgeformte Krümmung aufweisen, so dass das Werkzeug in Abhängigkeit vom Heraustreten aus dem distalen Ende des Arbeitskanals eine abgewinkelte Position einnimmt, diese korrekt dargestellt werden. Hierdurch wird eine verbesserte Simulation erreicht.

Weiterhin ist es bevorzugt, ausgehend von einem Nullpunkt der rotatorischen Bewegung unter Berücksichtigung des ermittelten Drehwinkels, eine aktuelle rotatorische Position des Werkzeugs des Arbeitsinstruments zu bestimmen. Hierdurch ist es möglich, Drehgeschwindigkeit und rotatorische Position des Werkzeugs des Arbeitselements im erzeugten virtuellen Bild richtig darzustellen. Auch hierdurch wird die Realitätsnähe der Simulation verbessert.

Gemäß einer bevorzugten Ausführungsform der Erfindung ist die Sensoranordnung zur Erkennung mindestens einer Referenzmarke auf der Oberfläche des Schafts eines eingeführten endoskopischen Arbeitsinstruments ausgebildet. Die Erkennung einer Referenzmarke ermöglicht eine automatische Festlegung eines Start- bzw. Nullpunkts der Bewegung des Arbeitsinstruments. Ausgehend von einem solchen Nullpunkt kann unter Verrechnung des zurückgelegten linearen oder rotatorischen Wegs die Einführungslänge und die räumliche Lage eines Arbeitsinstruments bzw. eines diesem zugeordneten Werkzeugs bestimmt werden. Dies ermöglicht die Darstellung der Position und Orientierung des Werkzeugs und ggf. des sichtbaren Teils des Schafts des Arbeitsinstruments im virtuellen Bild in der Weise, die sie aufgrund der gemessenen Bewegung bei einer Operation mit einem flexiblen Endoskop und einem Arbeitsinstrument der gleichen Art haben würden, sowie ggf. der Wechselwirkung mit dem Gewebe, beispielsweise bei Entnahme einer Gewebeprobe durch ein als Exzisionszange ausgebildetes Werkzeug.

Insbesondere kann auf diese Weise die Position und Orientierung des Werkzeugs relativ zur Endoskopvorrichtung bestimmt werden und, unter Verwendung der geometrischen Daten des Arbeitsinstruments und eines zu simulierenden Endoskops, relativ zum distalen Ende des Schafts des Endoskops und damit direkt die Position und Orientierung im virtuellen Bild. Hierdurch wird auf besonders einfache und sichere Weise eine realitätsnahe Simulation erreicht.

Gemäß einer Ausführungsform der Erfindung ist die Sensoranordnung in die Endoskopvorrichtung integriert, insbesondere im Bereich des Eingangs zur Einführung des endoskopischen Arbeitsinstruments. Dies ermöglicht eine kompakte Ausführung der Endoskopvorrichtung und damit des Simulationssystems.

Gemäß einer weiteren Ausführungsform der Erfindung ist die Sensoranordnung in einer Sensoreinheit aufgenommen, die insbesondere ein kompaktes Gehäuse aufweisen kann, das einen Anschluss für eine Datenleitung zur Übertragung der von der Sensoranordnung gelieferten Messwerte an die Steuerungseinrichtung umfassen kann. Ferner kann die Sensoreinheit elektrische und elektronische Komponenten zur Vorverarbeitung der Messwerte der Sensoranordnung und/oder zur Übertragung an die Steuerungseinrichtung umfassen, wie beispielsweise Verstärker, A/D-Wandler und eine Schnittstelle zur Weiterleitung der Daten. In bevorzugter Weise ist die Sensoreinheit lösbar mit der Endoskopvorrichtung verbunden und insbesondere durch mechanische Mittel an diese ankoppelbar. Dies hat den Vorteil einer besonders einfachen Handhabung. Die Sensoreinheit kann auch derart ausgestaltet sein, dass sie für eine Mehrzahl von Endoskoptypen passend ist. Dies hat den weiteren Vorteil, dass eine einzige Sensoreinheit innerhalb eines für unterschiedliche Endoskope geeigneten Simulationssystems verwendet werden kann.

Insbesondere kann die Sensoreinheit ein Gehäuse umfassen, das einen durchgehenden Kanal zur Aufnahme des Schafts eines endoskopischen Arbeitsinstruments aufweist, wobei an dem Kanal mindestens ein optischer Sensor angeordnet ist, der mit der Oberfläche des Schafts des Arbeitsinstruments zur Erfassung der Bewegung des Schafts zusammenwirkt. Ferner können am Gehäuse Kupplungseinrichtungen vorgesehen sein zur Verbindung des distalen Endes des Kanals mit dem proximalen Ende eines Arbeitskanals des flexiblen Endoskops. Auf diese Weise kann die Sensoreinheit an den Eingang der Endoskopvorrichtung angekoppelt werden. Insbesondere kann beispielsweise die Sensoreinheit in eine am proximalen Ende des Arbeitskanals des Endoskops vorhandene Abdeckkappe bzw. Dichtungskappe oder an Stelle dieser eingesetzt werden. Dies hat den Vorteil, dass keine Modifikation gegenüber üblichen, klinisch einsetzbaren Endoskopen notwendig ist.

In einer bevorzugten Weiterbildung kann am proximalen Ende des Kanals der Sensoreinheit eine Abdeck- bzw. Dichtungskappe ansetzbar sein. Dies hat den Vorteil, dass auch bei an das Endoskop angesetzter Sensoreinheit die Dichtheit des Arbeitskanals gewährleistet werden kann. Dadurch ist eine Verwendung der Sensoreinheit auch dann ohne weiteres möglich, wenn beispielsweise ein Saugkanal in den Arbeitskanal einmündet.

Gemäß einer weiteren bevorzugten Ausführungsform ist die Endoskopvorrichtung wie ein flexibles Endoskop mit einem Endoskopkopf und einem flexiblen, langerstreckten Schaft ausgebildet, wobei der Schaft mindestens einen Arbeitskanal zur Aufnahme eines endoskopischen Arbeitsinstruments aufweist, in den über einen am Endoskopkopf angeordneten Eingang ein Arbeitsinstrument einsetzbar ist. Diese Ausgestaltung ermöglicht eine besonders realistische Nachbildung eines klinisch einsetzbaren Endoskops. Ebenso wird auf diese Weise die Reibung, die bei der Bewegung des Arbeitsinstruments zu überwinden ist, in realistischer Weise realisiert.

Gemäß einer weiteren Ausführungsform ist die Endoskopvorrichtung ein klinisch einsetzbares Endoskop. Dieses kann die Sensoranordnung sowie Übertragungsmittel zur Übertragung der erfassten Daten der Bewegung des Arbeitsinstruments umfassen. Das klinisch einsetzbare Endoskop kann aber auch mit einer Sensoreinheit lösbar verbunden sein, so dass die Sensoranordnung bei einer Verwendung außerhalb des Simulationssystems abgekoppelt werden kann. Dies hat den Vorteil, dass ein Endoskop innerhalb des Simulationssystems verwendet werden kann, das hierfür nicht oder nur in einem geringen Maße modifiziert worden ist und für einen klinischen Einsatz geeignet ist. Hierdurch sind besonders realistische Trainingsbedingungen möglich.

Gemäß einer anderen Ausführungsform ist die Endoskopvorrichtung ein für die Verwendung in einem endoskopischen Simulationssystem modifiziertes Endoskop, das einem für den klinischen Einsatz geeigneten Endoskop zumindest teilweise nachgebildet ist. Im Unterschied zu einem Originalendoskop, d. h., einem für den klinischen Einsatz geeigneten Endoskop, kann ein solches Trainingsendoskop beispielsweise in der Weise modifiziert sein, dass der Schaft nicht zur Einführung in einen körperinneren Hohlraum vorgesehen ist oder dass nicht alle genannten Funktionen und Anschlüsse realisiert sind. Für eine realitätsnahe Simulation soll der Endoskopkopf des Trainingsendoskops bezüglich Größe, Form und Gewicht möglichst dem des Original-Endoskops entsprechen. Ein Trainingsendoskop muss nicht die gleichen Sicherheitsbestimmungen erfüllen wie ein klinisch einsetzbares Endoskop und ist daher kostengünstig verfügbar.

Ein erfindungsgemäßes flexibles Endoskop umfasst einen langerstreckten Schaft zur Einführung in einen Hohlraum, der mindestens einen Arbeitskanal zur Einführung eines endoskopischen Arbeitsinstruments in den Hohlraum aufweist, und einen Endoskopkopf, der mindestens einen Eingang zur Einführung des endoskopischen Arbeitsinstruments in den Schaft bzw. in den Arbeitskanal aufweist. Ferner weist das Endoskop mindestens eine Sensoranordnung zur Detektion einer Bewegung des mindestens einen endoskopischen Arbeitsinstruments auf, die mindestens einen optischen Sensor umfasst, der mit einer Oberfläche eines Schafts des endoskopischen Arbeitsinstruments zur Detektion der Bewegung des endoskopischen Arbeitsinstruments zusammenwirkt. Weiterhin kann das Endoskop Übertragungsmittel zur Übertragung der von der Sensoranordnung gelieferten Messwerte an eine Steuerungseinrichtung umfassen. Ein derartiges flexibles Endoskop ist zur Verwendung in einem erfindungsgemäßen Simulationssystem geeignet, bei dem die Steuerungseinrichtung ein virtuelles Bild einer endoskopischen Operationsszene in Abhängigkeit von einer Bewegung des mindestens einen endoskopischen Arbeitsinstruments erzeugt. Ein derartiges Endoskop kann aber auch in anderen Situationen verwendet werden, wo eine Erfassung der Bewegung des Arbeitsinstruments vorteilhaft ist, beispielsweise zu Dokumentationszwecken oder zur Steuerung bei telemedizinischen Anwendungen.

In einem erfindungsgemäßen Simulationssystem oder zusammen mit einem erfindungsgemäßen flexiblen Endoskop kann ein Arbeitsinstrument verwendet werden, das in der üblichen Weise mit einem langgestreckten flexiblen Schaft, einem Arbeitselement bzw. Werkzeug an dessen distalem Ende und einem am proximalen Ende des Schafts angeordneten Betätigungselement ausgebildet ist.

In besonders vorteilhafter Weise ist für die Verwendung in einem erfindungsgemäßen Simulationssystem oder mit einem erfindungsgemäßen flexiblen Endoskop ein erfindungsgemäßes endoskopisch einsetzbares Arbeitsinstrument vorgesehen, das einen langgestreckten flexiblen Schaft umfasst, an dessen distalem Ende ein Arbeitselement angeordnet ist. In bevorzugter Weise kann dieses über ein am proximalen Ende angeordnetes Betätigungselement bedient werden, wofür innerhalb des Schafts Übertragungsmittel, etwa ein Zugdraht oder elektrische Leitungen, angeordnet sein können. Ein erfindungsgemäßes Arbeitsinstrument weist mindestens eine Referenzmarke auf, die auf der Oberfläche des Schafts des Arbeitsinstruments angeordnet ist. Die Referenzmarke ist derart ausgebildet, dass diese von einer Sensoranordnung des Simulationssystems bzw. des Endoskops detektiert werden kann. Hierdurch ist eine Erkennung eines Null- bzw. Startpunkts bei der Einführung des Arbeitselements in den Schaft sichergestellt, so dass von diesem ausgehend aufgrund der von einer Sensoranordnung des Simulationssystems bzw. des Endoskops detektierten weiteren Bewegung des Arbeitselements eine aktuelle Position, insbesondere relativ zum Endoskop, ermittelt und beispielsweise für die Erzeugung eines virtuellen Bilds verwendet werden kann.

Insbesondere können separate Referenzmarken für die translatorische und/oder rotatorische Bewegung vorgesehen sein. Als Referenzmarken für die translatorische Bewegung sind insbesondere in Umfangsrichtung sich am Schaft erstreckende Strukturen geeignet, während als Referenzmarken für die Erkennung der rotatorischen Bewegung insbesondere in axialer Richtung sich am Schaft erstreckende Strukturen geeignet sind. Hierdurch ist die Erkennung der Referenzmarke für die translatorische Bewegung bei einer beliebigen Drehstellung des Schafts möglich, und die Erkennung der Referenzmarke für die rotatorische Bewegung bei einer beliebigen Vorschubposition. Die Referenzmarke für die translatorische Bewegung kann auch eine von der Referenzmarke für die rotatorische Bewegung unterschiedliche Struktur aufweisen, beispielsweise eine unterschiedliche Breite, ein unterschiedliches Material oder eine unterschiedliche Oberflächenstruktur.

In vorteilhafter Weise können mehrere Referenzmarken für die translatorische und/oder rotatorische Bewegung des Schafts vorgesehen sein, um eine sicherere Erkennung und/oder Messung der jeweiligen linearen oder Drehposition zu gewährleisten. Besonders vorteilhaft ist es, wenn diese Marken jeweils unterschiedlich ausgebildet sind, so dass auch an unterschiedlichen Positionen eine Erkennung der jeweiligen linearen oder rotatorischen Positionen möglich ist. Die jeweilige lineare bzw. Drehposition des Schafts kann dabei auf verschiedene Weisen, beispielsweise durch unterschiedliche Helligkeiten bzw. Kontraste, durch unterschiedliche Breiten oder auch durch unterschiedliche Abstände aufeinander folgender Referenzmarken kodiert sein. Hierdurch kann zu jedem Zeitpunkt, auch beispielsweise nach einer Störung des Systems während des Einführens des endoskopischen Arbeitsinstruments die aktuelle Position wieder sicher ermittelt werden, wobei das Arbeitsinstrument nur über einen relativ kurzen Weg linear bzw. rotatorisch bewegt werden muss.

Gemäß einer bevorzugten Weiterbildung weist die mindestens eine Referenzmarke einen Helligkeits- und/oder Rauigkeitskontrast zur Oberfläche des Schafts des Arbeitsinstruments auf. Hierdurch ist aufgrund des Signals des Sensors eine sichere Erkennung der Referenzmarke möglich. Insbesondere ist eine Erkennung der Referenzmarke mit Hilfe des gleichen Sensors möglich, der für die Detektion der Schaftbewegung vorgesehen ist.

Gemäß einer weiteren bevorzugten Ausführungsform werden die Referenzmarken durch reflektierende, absorbierende und/oder fluoreszierende Oberflächenbereiche gebildet. Oberflächenbereiche, die im Verhältnis zur benachbarten Schaftoberfläche unterschiedlich reflektieren bzw. absorbieren, ermöglichen eine einfache und sichere Erkennung der jeweiligen Referenzmarken. Welche Ausbildung der Referenzmarken vorteilhaft ist, hängt insbesondere von der Art der Schaftoberfläche und von der Art und Anordnung der Lichtquelle und des Sensors ab. Eine hochreflektierend ausgebildete Referenzmarke hat den besonderen Vorteil, dass diese unabhängig von der verwendeten Wellenlänge stets sicher erkennbar ist. Eine gegenüber der übrigen Oberfläche fluoreszierende, insbesondere stärker oder schwächer fluoreszierende Oberfläche der Referenzmarke ermöglicht insbesondere eine Detektion der Referenzmarke durch ein Signal in einem veränderten Wellenlängenbereich. So kann beispielsweise bei einer kurzen Wellenlänge beleuchtet werden und in diesem Bereich die Bewegung detektiert bzw. gemessen werden, während die Referenzmarke ein Signal bei einer längeren Wellenlänge erzeugt oder umgekehrt. Hierdurch ist eine besonders störungssichere Detektion der Referenzmarke möglich.

Die Erkennung einer Referenzmarke kann beispielsweise dadurch erfolgen, dass die Oberfläche derart ausgebildet ist, dass über eine kurze Vorschubstrecke bzw. einen kleinen Winkelbereich keine Bewegungsdetektion möglich ist, etwa aufgrund einer zu geringen oder zu großen Helligkeit des vom Sensor detektierten Signals oder aufgrund mangelnder Oberflächenstrukturen. Hierdurch kann erreicht werden, dass das Signal des Sensors, der zur Bewegungsdetektion eingesetzt wird, eine Erkennung der Referenzmarke ermöglicht.

Weiterhin ist es bevorzugt, dass die Oberfläche des Schafts des endoskopischen Arbeitsinstruments derart bearbeitet ist, dass die Oberfläche eine für die Verfolgung (Tracking) der Bewegung optimale Struktur aufweist. Insbesondere ist es bevorzugt, dass der Schaft des endoskopischen Arbeitsinstruments zumindest abschnittsweise matt ist. Insbesondere in dem Bereich, der für das Tracking benutzt wird, d. h., auf den bei der Bewegung der optische Sensor wirkt, kann eine matte Oberfläche vorgesehen sein. Zur Erzeugung einer matten Oberfläche kann diese beispielsweise aufgerauht, bevorzugt mit einer Rauigkeit R_{Z} von mehr als ca. 2 µm, oder mit einer entsprechenden Beschichtung versehen sein. Eine matte Oberfläche ermöglicht mit hoher Auflösung die Erkennung von Veränderungen der beobachteten Struktur, die bei Bewegungen auftreten, und daher eine Detektion eines von der Oberfläche reflektierten optischen Signals, das weitgehend unabhängig von der Richtung der Einstrahlung und der Beobachtung ist und auch beispielsweise unabhängig von der Krümmung der Oberfläche. Hierdurch ist eine besonders genaue und sichere Detektion bzw. Messung der Bewegung des Arbeitsinstruments möglich.

Ein erfindungsgemäßes Verfahren zur Detektion der Bewegung eines endoskopischen Arbeitsinstruments in einem Arbeitskanal eines flexiblen Endoskops umfasst folgende Schritte:
- Bereitstellen eines flexiblen Endoskops, das mindestens einen Arbeitskanal aufweist,
- Einführen eines endoskopisch einsetzbaren Arbeitsinstruments durch einen Eingang des Arbeitskanals,
- Beleuchten einer Oberfläche eines Schafts des endoskopisch einsetzbaren Arbeitsinstruments mittels einer Lichtquelle,
- Erfassen einer reflektierten Strahlung von der beleuchteten Oberfläche des Schafts mittels eines optischen abbildenden Sensors,
- Ermitteln eines Bewegungsindikators aus der erfassten Strahlung.

Ein Bewegungsindikator kann beispielsweise der optische Fluss sein, der aus einer Folge von Bildern der Oberfläche des Schafts des Arbeitsinstruments ermittelt werden kann. Aus dem optischen Fluss kann die Geschwindigkeit in zwei Dimensionen bestimmt werden und damit die translatorische und rotatorische Bewegung des Arbeitsinstruments.

Das erfindungsgemäße Verfahren kann weitere Schritte umfassen, wie etwa die Übertragung von erfassten Daten, beispielsweise des ermittelten Geschwindigkeitsindikators, an eine Auswerte- und/oder Anzeigevorrichtung, die Berechnung der linearen und/oder rotatorischen Geschwindigkeit der Bewegung des Arbeitselements oder die Bestimmung einer translatorischen und/oder rotatorischen Position des Arbeitselements und/oder eines Werkzeugs des Arbeitselements, ggf. unter Verwendung der Erkennung einer oder mehrerer Referenzmarken auf der Oberfläche des Schafts des Arbeitsinstruments.

Ein erfindungsgemäßes Verfahren für das Training endoskopischer Operationen geht aus von dem oben beschriebenen Verfahren zur Detektion der Bewegung eines endoskopischen Arbeitsinstruments in einem Arbeitskanal eines flexiblen Endoskops und umfasst insbesondere folgende weitere Schritte:
- Übertragen der Messwerte des Bewegungsindikators an eine Steuerungseinrichtung,
- Erzeugen eines virtuellen Bildes einer endoskopischen Operationsszene durch die Steuerungseinrichtung in Abhängigkeit von der durch die Messwerte erfassten Bewegung des endoskopischen Arbeitsinstruments und
- Anzeigen des virtuellen Bildes für einen Benutzer.

Das erfindungsgemäße Verfahren für das Training endoskopischer Operationen kann weitere Schritte umfassen, beispielsweise das Erfassen der Betätigung von Bedienelementen des Arbeitsinstruments und die Verwendung der betreffenden Daten bei der Erzeugung eines virtuellen Bildes, das für den Benutzer dargestellt werden kann. Ebenso können beispielsweise Warnsignale bei Fehlbedienungen, beispielsweise bei Über-oder Unterschreiten einer in der simulierten Operationssituation geeigneten bzw. physiologisch verträglichen Vorschubstrecke oder eines zulässigen Winkelbereichs und/oder entsprechende Kraftrückwirkungen erzeugt und dem Benutzer taktil, visuell und/oder akustisch angezeigt werden.

In den vorstehenden Ausführungen umfasst der Begriff "Operationen" auch beispielsweise diagnostische Anwendungen bzw. Eingriffe. Erfindungsgemäße Vorrichtungen und Verfahren sind ebenso wie für chirurgische bzw. medizinische Zwecke auch beispielsweise zur Untersuchung und Bearbeitung von Hohlräumen bei technischen Gegenständen vorgesehen. Ebenso sind die erfindungsgemäßen Vorrichtungen und Verfahren auch für Demonstrations- und Lehrzwecke geeignet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung eines bevorzugten Ausführungsbeispiels und der beigefügten Zeichnung. Es zeigen:
Figur 1 ein erfindungsgemäßes Endoskop in schematischer Schnittdarstellung;
Fig. 2a einen Teilschnitt eines Ausführungsbeispiels eines erfindungsgemäßen Endoskops;
Fig. 2b und 2c zwei Ausführungsbeispiele einer Sensoranordnung in schematischer Schnittdarstellung;
Fig. 3 eine Teilansicht eines weiteren Ausführungsbeispiels eines erfindungsgemäßen Endoskops;
Fig. 4 eine Teilansicht eines Ausführungsbeispiels eines erfindungsgemäßen Arbeitsinstruments;
Fig. 5 ein Ausführungsbeispiel eines erfindungsgemäßen Simulationssystems in schematischer Darstellung.

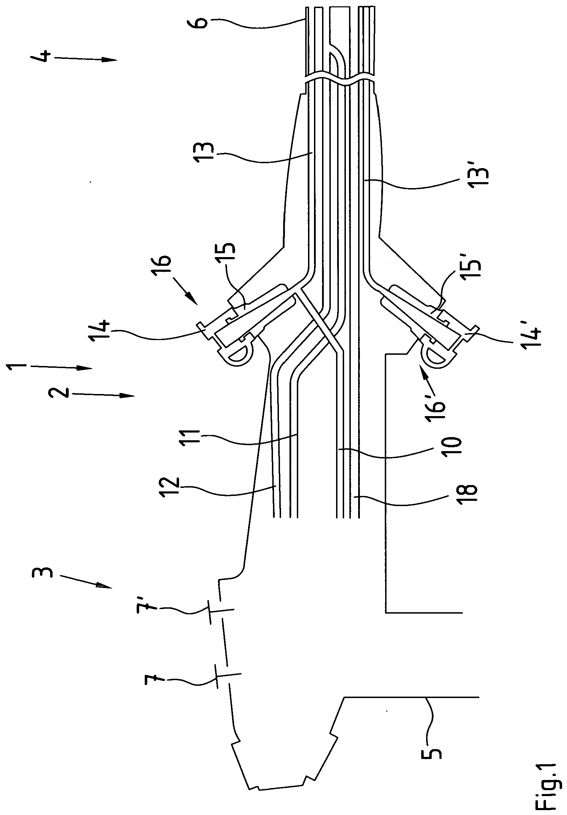

Ein erfindungsgemäßes Endoskop 1 bzw. eine Endoskopvorrichtung zur Verwendung in einem erfindungsgemäßen Simulationssystem ist gemäß dem in Fig. 1 dargestellten

Ausführungsbeispiel mit einem Endoskopkopf 2, der insbesondere einen Handgriff 3 umfasst, einem für die Einführung in eine Körperhöhle vorgesehenen langerstreckten flexiblen Schaft 4 und einem Versorgungsschlauch 5 ausgebildet und kann ferner eine Saugleitung 10, eine Insufflationsleitung 11 und eine Spülleitung 12 aufweisen, die durch den Schaft 4 bis zu dessen distalem Ende 6 geführt sind. Im proximalen Bereich sind die Saugleitung 10, die Insufflationsleitung 11 und die Spülleitung 12 über den Versorgungsschlauch 5 mit entsprechenden Versorgungs- und Steuereinrichtungen verbunden (nicht dargestellt). Der Handgriff 3 kann weiterhin Ventilknöpfe 7, 7' sowie weitere Bedienelemente (nicht dargestellt) aufweisen.

Das Endoskop 1 weist ferner einen Instrumentenkanal bzw. Arbeitskanal 13 auf, der durch den Schaft 4 bis zum distalen Ende 6 geführt ist. Der Arbeitskanal 13 ist für die Einführung von Arbeitsinstrumenten vorgesehen und ist mit einer Abdeckkappe 14 dicht verschließbar. Der Arbeitskanal 13 weist einen Eingang 16 auf, durch den ein endoskopisches Arbeitsinstrument eingeführt werden kann. Zur Erleichterung des Einführens ist eine Eingangsbuchse 15 insbesondere konisch ausgebildet. In den Arbeitskanal 13 kann die Saugleitung 10 einmünden. Das Endoskop 1 kann ferner einen weiteren Arbeitskanal 13' aufweisen, der durch eine Verschlusskappe 14' verschlossen werden kann und einen Eingang 16' mit einer Buchse 15' aufweist.

Darüber hinaus kann eine weitere Leitung 18, die bis zum distalen Ende 6 durchgeführt ist, vorhanden sein, sowie ggf. weitere, in Fig. 1 nicht dargestellte Komponenten eines klinisch einsetzbaren Endoskops, beispielsweise weitere Bedienungs- und Übertragungselemente zur Steuerung der Bewegung bzw. Abwinkelung des distalen Endbereichs des Schafts, eine Beleuchtungs-Optik, eine Beobachtungs-Optik und/oder eine Kamera mit dazugehörigen Bedienungselementen.

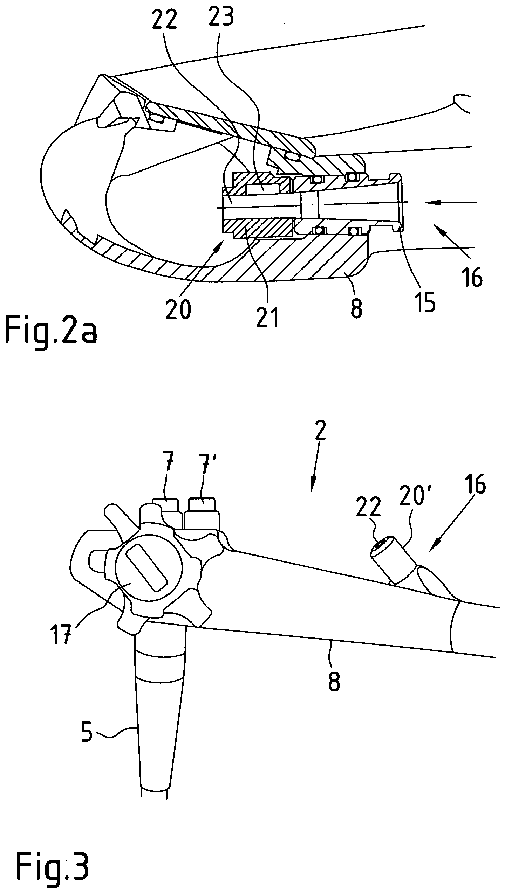

Wie in Fig. 2a in einem Teilschnitt gezeigt, kann innerhalb des Endoskopkopfs 3 am Eingang 16 eine Sensoreinheit 20 vorgesehen sein, die insbesondere ein Gehäuse 21 umfasst, das einen Kanal 22 zur Aufnahme eines in Richtung des Pfeils einzuführenden Schafts eines endoskopischen Arbeitsinstruments ausbildet. An dem Kanal 22 ist eine Sensoranordnung 23 angeordnet, die beispielsweise eine LED zur Beleuchtung der Oberfläche eines eingeführten Arbeitsinstruments sowie eine Abbildungsoptik und einen Bildsensor zur Aufnahme eines Bilds der beleuchteten Oberfläche umfasst (nicht dargestellt). Wie in Fig. 2a dargestellt, befindet sich die Sensoreinheit 20 in diesem Ausführungsbeispiel innerhalb des Gehäuses 8 des Endoskopkopfs 2.

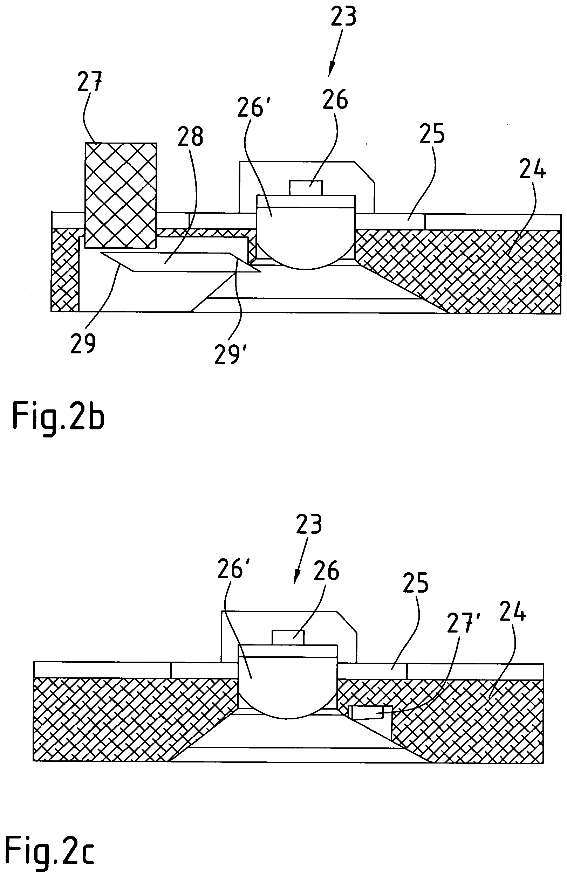

Gemäß den in Fig. 2b und 2c dargestellten Ausführungsbeispielen kann die Sensoranordnung 23 einen Träger 24 umfassen, der eine Leiterplatte bzw. Platine 25 mit einem optischen Sensor 26 trägt, der beispielsweise als Bildsensor ausgebildet sein kann. Ferner trägt der Träger 24 eine Lichtquelle 27, 27', deren Licht zur Beleuchtung einer Oberfläche eines in den Kanal 22 eingeführten Arbeitsinstruments, insbesondere des Schafts des Arbeitsinstruments, dient (in Fig. 2b und 2c nicht dargestellt). Ein optisches System 26' des optischen Sensors 26 ist derart angeordnet, dass es Licht von der zu detektierenden Oberfläche des Arbeitsinstruments auf den Sensor 26 bündelt, insbesondere auf dem Bildaufnehmer eines Bildsensors ein Bild der Oberfläche erzeugt. Die Platine 25 kann auch das optische System 26' und/oder die Lichtquelle 27, 27' tragen sowie ggf. weitere optische oder elektronische Bauelemente, die beispielsweise der Lichtübertragung, der Ansteuerung des Sensors 26 und/oder der Datenverarbeitung bzw. Datenübertragung dienen können.

Wie in Fig. 2b gezeigt, kann das Licht der Lichtquelle 27 über einen Lichtleiter 28 in Richtung auf die Oberfläche des Arbeitsinstruments geleitet werden. Der Lichtleiter 28 ist ein Glasstab mit schrägstehenden, bevorzugt verspiegelten Endflächen 29, 29', könnte aber auch etwa als ein Bündel von Lichtleitfasern ausgebildet sein. Die Lichtein-und/oder Lichtaustrittsflächen des Lichtleiters können zur Erhöhung des Wirkungsgrads der Beleuchtung mit einer Antireflexschicht versehen sein. Als Lichtquelle 27 kann insbesondere eine Laserdiode oder eine lichtemittierende Diode (LED) verwendet werden. Ebenso ist eine Beleuchtung durch eine externe Lichtquelle über ein Lichtleitkabel möglich, dessen Endfläche zur Einkopplung des Beleuchtungslichts in den Lichtleiter 28 oder auch direkt zur Beleuchtung der Oberfläche des Arbeitsinstruments angeordnet sein kann (nicht dargestellt).

Gemäß Fig. 2c kann die Lichtquelle 27' auch zur direkten Beleuchtung der Oberfläche angeordnet sein. Hierfür kann die Lichtquelle 27' beispielsweise als LED ausgebildet sein. Diese kann aufgrund des großen Öffnungswinkels des abgestrahlten Lichts parallel zu einer Längsachse des optischen Systems 26' des Sensors 26 gerichtet sein, insbesondere wenn die LED keine integrierte Linse umfasst und deshalb nahezu als Lambertscher Strahler wirkt. Die Lichtquelle 27' kann aber auch schräg hierzu angeordnet sein (in Fig. 2c nicht dargestellt).

Zumindest ein Teil des Lichts, das die Schaftoberfläche des Arbeitsinstruments trifft, wird in Richtung auf das optische System 26' des Sensors 26 reflektiert. Dabei hängt die reflektierte Intensität stark von der Art der Oberfläche ab, insbesondere von der Oberflächenstruktur, von einer ggf. vorhandenen Oberflächenbeschichtung und/oder von der Farbe der Oberfläche. Während eine glatte Oberfläche vorwiegend gerichtet unter einem dem Einfallswinkel gleichen Ausfallswinkel reflektiert, ist die Reflexion einer matten Oberfläche über einen breiteren Winkelbereich verteilt. Die Anordnung von Lichtquelle 27, 27', ggf. Lichtleiter 28 und optischem System 26' des Sensors 26 ist daher derart gewählt, dass ausreichend Licht von einer zur Detektion der Bewegung des Arbeitsinstruments genutzten Schaftoberfläche zum Sensor 26 gelangt, und außerdem ggf. eine sichere Erkennung der Referenzmarken möglich ist.

Wie in Fig. 3 in einer Teilansicht dargestellt, kann die Sensoreinheit 20' auch außerhalb des Gehäuses 8 des Endoskopkopfs 2 angeordnet sein. Der von der Sensoreinheit 20' gebildete Kanal 22 mündet in den Eingang 16 bzw. wirkt selbst als Eingang zur Einführung eines endoskopischen Arbeitsinstruments und kann deshalb insbesondere konisch ausgebildet sein. Im Übrigen kann die Sensoreinheit 20' wie zu Fig. 2a bis 2c beschrieben ausgebildet sein. In Fig. 3 sind weitere Bedienelemente 17 zur Abwinkelung des distalen Endes 6 des Endoskopschafts 4 dargestellt. Eine Sensoreinheit 20 bzw. 20' kann auch an einem weiteren Eingang 16' vorhanden sein.

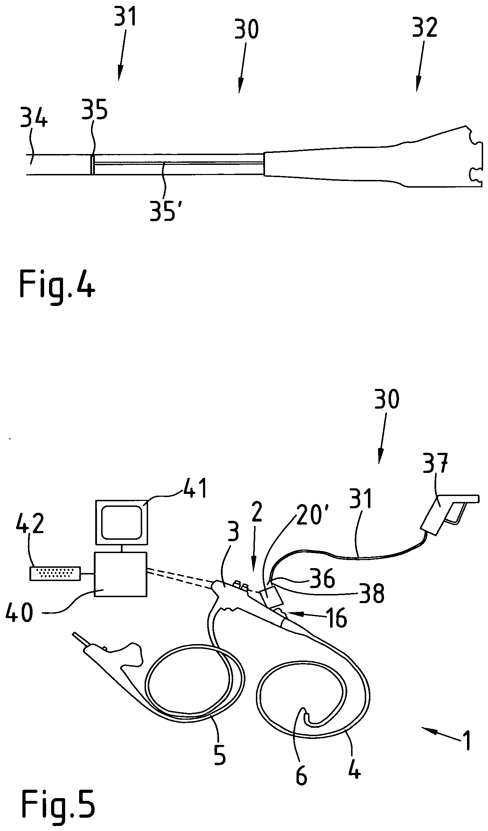

Gemäß Fig. 4 umfasst ein erfindungsgemäßes Arbeitsinstrument 30 einen Schaft 31, einen proximalen Endbereich 32, an dem Betätigungselemente und/oder Anschlüsse vorhanden sind (nicht dargestellt), sowie ein am distalen Ende des Schafts 31 angeordnetes Werkzeug bzw. Arbeitselement (nicht dargestellt). Die Oberfläche des Schafts 31 weist einen mattierten Bereich 33 und einen nicht mattierten Bereich 34, der eine Standardoberfläche darstellt, auf. Ferner sind eine Referenzmarke 35 zur Festlegung eines Nullpunkts für die translatorische Bewegung des Arbeitselements und eine Referenzmarke 35' zur Festlegung eines Nullpunkts für die rotatorische Bewegung des Arbeitselements auf der Oberfläche des Schafts angeordnet. Die Referenzmarke 35 ist dabei als umfangsweise aufgebrachter Kreis ausgebildet, während die Referenzmarke 35' als achsenparallele Linie auf der Oberfläche des Schafts angebracht ist. Die Referenzmarken 35, 35' können beispielsweise aus nicht mattiertem oder hochreflektierendem Material bestehen, das ein zu den benachbarten Oberflächenbereichen deutlich unterschiedliches Signal der Sensoranordnung erzeugt.

Wie in Fig. 5 in einer schematischen Übersichtsdarstellung gezeigt, umfasst ein erfindungsgemäßes Simulationssystem insbesondere ein flexibles Endoskop 1 mit einem Endoskopkopf 2, einem Handgriff 3, einem flexiblen Schaft 4 und einem Versorgungsschlauch 5. Das distale Ende 6 des Endoskopschafts 4 kann steuerbar sein, wie in Fig. 5 durch die stärkere Krümmung im Endbereich des Schafts 4 angedeutet. An einem Einführstutzen bzw. Eingang 16 ist eine Sensoreinheit 20' ankoppelbar, durch die ein flexibles endoskopisches Arbeitsinstrument 30 in den Schaft 4 einsetzbar und derart bis zum distalen Ende 6 einführbar ist, dass zumindest ein Werkzeug 38, das am distalen Ende 36 des Schafts 31 des Arbeitsinstruments 30 angeordnet ist, über das distale Ende 6 des Endoskopschafts 4 hinausragt. Am proximalen Ende des Schafts 31 des Arbeitsinstruments 30 ist ein Handgriff 37 zur Betätigung des Werkzeugs angeordnet. Weiterhin kann das Simulationssystem eine nicht dargestellte Vorrichtung zur Erfassung einer Bewegung des Schafts 4 des Endoskops 1 bzw. der Endoskopvorrichtung umfassen, die beispielsweise eine Aufnahme für den Schaft und einen oder mehrere Sensoren zur Erfassung der Bewegung des Schafts aufweisen kann. Die Vorrichtung zur Erfassung der Bewegung des Schafts 4 kann in an sich bekannter Weise aufgebaut sein oder auch eine Sensoranordnung ähnlich der, die erfindungsgemäß für die Detektion der Bewegung des endoskopischen Arbeitsinstruments 30 vorgesehen ist, umfassen.

Das Simulationssystem umfasst ferner eine Steuerungseinrichtung 40, die insbesondere einen Bildprozessor umfasst zur Erzeugung bzw. Bearbeitung eines Videobilds, das auf einer Anzeigeeinrichtung 41 für den Benutzer dargestellt wird. Das Videobild stellt als virtuelle Realität eine endoskopische Sicht des Körperhohlraums dar, der bei dem Training mit dem Simulationssystem einem endoskopischen Eingriff unterzogen wird. Hierfür kann die Steuerungseinrichtung 40 insbesondere Speichermittel umfassen, auf denen Daten über den betreffenden Körperhohlraum gespeichert sind und für die Simulation abgerufen werden können. Ferner kann der Steuerungseinrichtung 40 eine Eingabeeinrichtung 42 zugeordnet sein, die beispielsweise als Tastatur oder Touch-Schreen ausgebildet sein kann, und über die der Benutzer die Simulation definieren, starten und/oder steuern kann. Die Steuerungseinrichtung 40 kann beispielsweise als PC oder auch als spezieller Bildverarbeitungsrechner ausgebildet sein oder einen solchen umfassen. Ferner können weitere Eingabe- und/oder Anzeigeeinrichtungen vorgesehen sein. Das erfindungsgemäße Simulationssystem kann noch weitere Komponenten umfassen, wie beispielsweise eine Einrichtung zur Detektion von Bewegungen des distalen Endes 6 bzw. das Schafts 4, die bei der Erzeugung des virtuellen Bilds berücksichtigt werden. Die Messwerte für die Bewegung des endoskopischen Arbeitsinstruments 30, die von der Sensoreinheit 20' ermittelt werden, sowie ggf. weitere Daten, werden vom Endoskop 1 über drahtlose oder leitungsgebundene Übertragungsmittel an die Steuerungseinrichtung 40 übertragen (in Fig. 5 symbolisch durch gestrichelte Linien dargestellt). Zur Übertragung der Messwerte der Bewegung des Arbeitsinstruments 30 kann beispielsweise eine Standard-Schnittstelle, wie eine USB-Schnittstelle oder auch eine Schnittstelle für eine Computermaus, verwendet werden. Die entsprechende Signalvorverarbeitung kann durch elektronische Elemente bereits innerhalb der Sensoreinheit 20' oder innerhalb des Endoskops 1 bzw. der Endoskopvorrichtung vorgenommen werden. Ebenso kann eine weitere Signalverarbeitung, beispielsweise die Berechnung der Einführungslänge des endoskopischen Instruments, bereits innerhalb der Sensoreinheit 20' oder innerhalb des Endoskops 1 erfolgen. Die Daten der Bewegung des Schafts 4 des Endoskops 1 bzw. der Endoskopvorrichtung können ebenfalls zur Steuerungseinrichtung 40 übertragen werden.

Bei der Durchführung einer Schulung bzw. eines Trainings für eine endoskopische Operation hält der Benutzer das Endoskop 1 bzw. die Endoskopvorrichtung am Handgriff 3. Zur Simulation der Einführung des Endoskops in einen körperinneren Hohlraum wird der Schaft 4 des Endoskops 1 bzw. der Endoskopvorrichtung in axialer Richtung verschoben. Danach, oder auch gleichzeitig oder davor, wird das Schaftende 36 des endoskopischen Arbeitsinstruments 30 in den Eingang 16 bzw. in die Sensoreinheit 20 bzw. 20' eingeführt und der Schaft 31 des Arbeitsinstruments 30 in einen Arbeitskanal innerhalb des Schafts 4 des Endoskops eingeschoben. Wird nun von der Sensoranordnung eine Referenzmarke für die translatorische Bewegung detektiert, so wird ein Signal erzeugt, das für die Auswertung und die Berechnung des virtuellen endoskopischen Bilds als Nullpunkt für die Vorschubbewegung des Arbeitsinstruments 30 verwendet wird. Die weitere Bewegung wird von der Sensoranordnung durch Zusammenwirkung mit der mattierten Oberfläche gemessen. Ausgehend von dem detektierten Nullpunkt kann dadurch die Vorschubstrecke ermittelt werden und bestimmt werden, wie weit das Werkzeug 38 auf Grund der gegebenen Längen von Endoskopschaft 4 und Schaft 31 des endoskopischen Arbeitsinstruments 30 über das Ende 6 des Endoskopschafts 4 hinaus in den Hohlraum hineinragt. In gleicher Weise kann die Sensoranordnung bei Detektion der Referenzmarke für die rotatorische Bewegung ein Signal erzeugen, woraus eine vorgegebene Drehposition ermittelt wird. Die weitere rotatorische Bewegung des Instruments 30 wird durch Zusammenwirkung der Sensoranordnung mit der matten Oberfläche detektiert und ermöglicht es, die Drehposition des Schafts 31 zu bestimmen und für die Erzeugung des virtuellen Bilds zu verwenden. Ausgehend von der detektierten Referenzmarke wird in Echtzeit die Position und Orientierung eines am distalen Ende 36 des Schafts 31 des Arbeitsinstruments 30 angeordneten Werkzeugs 38 ermittelt. Diese Position und Orientierung sind auf das distale Ende 6 des Schafts 4 des Endoskops bezogen. Die entsprechenden Daten werden an die Steuerungseinrichtung 40 übermittelt, wo hiermit ein virtuelles Bild erzeugt wird, in dem das Werkzeug 38 an der Position und mit der Orientierung dargestellt wird, die es bei einer mit dem entsprechenden Endoskop und dem entsprechenden Arbeitsinstrument durchgeführten endoskopischen Operation nach Durchführung der gleichen Bewegungen hätte. Wenn außerdem die Position und Orientierung des distalen Endes 6 des Schafts 4 des Endoskops bzw. der Endoskopvorrichtung ermittelt werden, kann unter Zuhilfenahme von Daten über den Hohlraum ein virtuelles Bild erzeugt werden, das die in der entsprechenden Operationssituation sichtbare endoskopische Szene vollständig wiedergibt.

Je nach simulierter Operation oder Aufgabenstellung kann natürlich auch ein anderer Ablauf als der oben beispielhaft beschriebene gewählt werden.

### Bezugszeichenliste

- 1: Endoskop
- 2: Endoskopkopf
- 3: Handgriff
- 4: Schaft
- 5: Versorgungsschlauch
- 6: distales Ende
- 7, 7': Ventilknopf
- 8: Gehäuse
- 10: Saugleitung
- 11: Insufflationsleitung
- 12: Spülleitung
- 13, 13': Arbeitskanal
- 14,: 14'Verschlusskappe
- 15,: 15' Buchse
- 16,: 16' Eingang
- 17: Bedienelement
- 20, 20': Sensoreinheit
- 21: Gehäuse
- 22: Kanal
- 23: Sensoranordnung
- 24: Träger
- 25: Platine
- 26: optischer Sensor
- 26': optisches System
- 27,27': Lichtquelle
- 28: Lichtleiter
- 29,29': Endflächen
- 30: Arbeitsinstrument
- 31: Schaft
- 32: proximaler Endbereich
- 33: mattierter Bereich
- 34: nicht mattierter Bereich
- 35, 35': Referenzmarke
- 36: distales Ende
- 37: Handgriff
- 38: Werkzeug
- 40: Steuerungseinrichtung
- 41: Anzeigeeinrichtung
- 42: Eingabeeinrichtung

## Patentansprüche

1. Simulationssystem für das Training endoskopischer Operationen, umfassend eine Endoskopvorrichtung, die mindestens einen Eingang (16) zur Einführung eines endoskopischen Arbeitsinstruments (30) aufweist, mindestens eine Sensoranordnung (23) zur Detektion einer Bewegung des mindestens einen endoskopischen Arbeitsinstruments (30), eine Steuerungseinrichtung (40) zur Erzeugung eines virtuellen Bildes einer endoskopischen Operationsszene in Abhängigkeit von einer Bewegung des mindestens einen endoskopischen Arbeitsinstruments (30), Übertragungsmittel zur Übertragung der von der Sensoranordnung (23) gelieferten Messwerte an die Steuerungseinrichtung (40) zur Verwendung bei der Erzeugung des virtuellen Bildes und eine Anzeigeeinrichtung (41) zur Anzeige des virtuellen Bildes, **dadurch gekennzeichnet, dass** die Sensoranordnung (23) mindestens einen optischen Sensor umfasst, der mit einer durch eine Lichtquelle (27, 27') beleuchteten Oberfläche (33, 34) eines Schafts (31) des endoskopischen Arbeitsinstruments (30) zur Detektion der Bewegung des endoskopischen Arbeitsinstruments (30) zusammenwirkt, wobei der mindestens eine optische Sensor ein optischer abbildender Sensor ist, der zur Detektion von translatorischen und rotatorischen Bewegungen des endoskopischen Arbeitsinstruments (30) ausgebildet ist.

2. Simulationssystem nach Anspruch 1, **dadurch gekennzeichnet, dass** die Sensoranordnung (23) mindestens eine LED oder Laserlichtquelle (27, 27') aufweist.

3. Simulationssystem nach einem der vorhergehenden Ansprüche, **dadurch gekennzeichnet, dass** der mindestens eine optische Sensor als Bildsensor ausgebildet ist, und dass die Sensoranordnung (23) ferner Abbildungsmittel zur Erzeugung eines Bilds einer Oberfläche (33, 34) des endoskopischen Arbeitsinstruments (30) auf einem Bildaufnehmer des Bildsensors umfasst.

4. Simulationssystem nach einem der vorhergehenden Ansprüche, **dadurch gekennzeichnet, dass** die Sensoranordnung zur Erkennung mindestens einer Referenzmarke auf der Oberfläche (33, 34) des Schafts (31) des endoskopischen Arbeitsinstruments (30) ausgebildet ist, die eine automatische Festlegung eines Start- bzw. Nullpunkts der Bewegung des Arbeitsinstruments (30) ermöglicht.

5. Simulationssystem nach einem der vorhergehenden Ansprüche, **dadurch gekennzeichnet, dass** die Sensoranordnung in einer Sensoreinheit (20') aufgenommen ist, die lösbar mit der Endoskopvorrichtung verbunden ist.

6. Simulationssystem nach einem der vorhergehenden Ansprüche, **dadurch gekennzeichnet, dass** die Endoskopvorrichtung ein flexibles Endoskop (1) mit einem Endoskopkopf (2) und einem flexiblen, langerstreckten Schaft (4) ist, wobei der Schaft (4) mindestens einen Arbeitskanal (13, 13') zur Aufnahme des endoskopischen Arbeitsinstruments (30) aufweist und der Eingang (16) zur Einführung des endoskopischen Arbeitsinstruments (30) in den Schaft (4) ausgebildet ist.

7. Simulationssystem nach einem der vorhergehenden Ansprüche, **dadurch gekennzeichnet, dass** die Endoskopvorrichtung ein klinisch einsetzbares Endoskop ist.

8. Simulationssystem nach einem der Ansprüche 1 bis 6, **dadurch gekennzeichnet, dass** die Endoskopvorrichtung ein Trainingsendoskop ist.

9. Flexibles Endoskop umfassend einen langerstreckten Schaft (4) zur Einführung in einen Hohlraum, wobei der Schaft mindestens einen Arbeitskanal (13, 13') zur Einführung eines endoskopischen Arbeitsinstruments (30) in den Hohlraum aufweist, und einen Endoskopkopf (2), der mindestens einen Eingang (16) zur Einführung des endoskopischen Arbeitsinstruments (30) in den Schaft (4) aufweist, **dadurch gekennzeichnet, dass** das flexible Endoskop mindestens eine Sensoranordnung (23) zur Detektion einer Bewegung des mindestens einen endoskopischen Arbeitsinstruments (30) aufweist, die mindestens einen optischen Sensor umfasst, der mit einer durch eine Lichtquelle (27, 27') beleuchteten Oberfläche (33, 34) eines Schafts (31) des endoskopischen Arbeitsinstruments (30) zur Detektion der Bewegung des endoskopischen Arbeitsinstruments (30) zusammenwirkt, wobei der mindestens eine optische Sensor ein optischer abbildender Sensor ist, der zur Detektion von translatorischen und rotatorischen Bewegungen des endoskopischen Arbeitsinstruments (30) ausgebildet ist.

10. Endoskopisches Arbeitsinstrument (30) zur Verwendung mit einem Simulationssystem oder einem flexiblen Endoskop (1) gemäß einem der vorhergehenden Ansprüche mit einem langerstreckten Schaft, **dadurch gekennzeichnet, dass** eine Oberfläche (33, 34) des Schafts mindestens eine Referenzmarke (35) für die Detektion eines Startpunkts der translatorischen Bewegung und/oder mindestens eine Referenzmarke (35') für die Detektion eines Startpunkts für die rotatorische Bewegung des endoskopischen Arbeitsinstruments (30) aufweist.

11. Endoskopisches Arbeitsinstrument nach Anspruch 10, **dadurch gekennzeichnet, dass** die mindestens eine Referenzmarke (35, 35') durch einen hochreflektierenden, hochabsorbierenden oder fluoreszierenden Oberflächenbereich des Schafts (31) des endoskopischen Arbeitsinstruments (30) gebildet ist.

12. Endoskopisches Arbeitsinstrument nach Anspruch 10 oder 11, **dadurch gekennzeichnet, dass** der Schaft (31) des endoskopischen Arbeitsinstruments (30) zumindest abschnittsweise matt ist.

13. Verfahren zur Erfassung einer Bewegung eines endoskopischen Arbeitsinstruments (30), in einem Arbeitskanal (13, 13') eines flexiblen Endoskops (1), umfassend folgende Schritte:
- Bereitstellen eines flexiblen Endoskops (1), das mindestens einen Arbeitskanal (13, 13') aufweist,
- Einführen eines endoskopisch einsetzbaren Arbeitsinstruments (30) in einem Eingang (16) des Arbeitskanals (13, 13'),
- Beleuchten einer Oberfläche (33, 34) eines Schafts (31) des endoskopisch einsetzbaren Arbeitsinstruments (30) mittels einer Lichtquelle (27, 27'),
- Erfassen einer reflektierten Strahlung von der beleuchteten Oberfläche (33, 34) des Schafts (31) mittels eines optischen abbildenden Sensors,
- Ermitteln eines Bewegungsindikators zur Bestimmung einer translatorischen und einer rotatorischen Bewegung des Arbeitsinstruments (30) aus der erfassten Strahlung.

14. Verfahren für das Training endoskopischer Operationen, umfassend ein Verfahren gemäß Anspruch 13 und folgende weiteren Schritte:
- Übertragen der Messwerte des Bewegungsindikators an eine Steuerungseinrichtung (40),
- Erzeugen eines virtuellen Bildes einer endoskopischen Operationsszene durch die Steuerungseinrichtung (40) in Abhängigkeit von der durch die Messwerte erfassten Bewegung des endoskopischen Arbeitsinstruments (30) und
- Anzeigen des virtuellen Bildes für einen Benutzer.

## Claims

1. Simulation system for training endoscopic operations, comprising an endoscope apparatus that has at least one entrance (16) for introducing an endoscopic work instrument (30), at least one sensor arrangement (23) for detecting a movement of the at least one endoscopic work instrument (30), a control device (40) for producing a virtual image of an endoscope operating scene depending on a movement of the at least one endoscopic work instrument (30), transmission means for transmitting the measurement values supplied by the sensor arrangement (23) to the control device (40) for use when producing the virtual image and a display device (41) for displaying the virtual image, **characterized in that** the sensor arrangement (23) comprises at least one optical sensor that interacts with a surface (33, 34), illuminated by a light source (27, 27'), of a shaft (31) of the endoscopic work instrument (30) for detecting the movement of the endoscopic work instrument (30), wherein the at least one optical sensor is an optical imaging sensor that is embodied to detect translational and rotational movements of the endoscopic work instrument (30).

2. Simulation system according to Claim 1, **characterized in that** the sensor arrangement (23) has at least one LED or laser light source (27, 27').

3. Simulation system according to any one of the preceding claims, **characterized in that** the at least one optical sensor is embodied as an image sensor and **in that** the sensor arrangement (23) further comprises imaging means for producing an image of a surface (33, 34) of the endoscopic work instrument (30) on an image recorder of the image sensor.

4. Simulation system according to any one of the preceding claims, **characterized in that** the sensor arrangement is embodied to identify at least one reference mark on the surface (33, 34) of the shaft (31) of the endoscopic work instrument (30), said reference mark facilitating automatic setting of a start or zero point of the movement of the work instrument (30).

5. Simulation system according to any one of the preceding claims, **characterized in that** the sensor arrangement is received in a sensor unit (20') that is detachably connected to the endoscope apparatus.

6. Simulation system according to any one of the preceding claims, **characterized in that** the endoscope apparatus is a flexible endoscope (1) with an endoscope head (2) and a flexible, elongate shaft (4), wherein the shaft (4) has at least one work channel (13, 13') for receiving the endoscopic work instrument (30) and the entrance (16) is embodied to introduce the endoscopic work instrument (30) into the shaft (4).

7. Simulation system according to any one of the preceding claims, **characterized in that** the endoscope apparatus is an endoscope that can be used in a clinical context.

8. Simulation system according to any one of Claims 1 to 6, **characterized in that** the endoscope apparatus is a training endoscope.

9. Flexible endoscope comprising an elongate shaft (4) for introduction into a cavity, wherein the shaft has at least one work channel (13, 13') for introducing an endoscopic work instrument (30) into the cavity and an endoscope head (2) that has at least one entrance (16) for introducing the endoscopic work instrument (30) into the shaft (4), **characterized in that** the flexible endoscope has at least one sensor arrangement (23) for detecting a movement of the at least one endoscopic work instrument (30), said sensor arrangement comprising at least one optical sensor that interacts with a surface (33, 34), illuminated by a light source (27, 27'), of a shaft (31) of the endoscopic work instrument (30) for detecting the movement of the endoscopic work instrument (30), wherein the at least one optical sensor is an optical imaging sensor that is embodied to detect translational and rotational movements of the endoscopic work instrument (30).

10. Endoscopic work instrument (30) for use with a simulation system or a flexible endoscope (1) according to one of the preceding claims with an elongate shaft, **characterized in that** a surface (33, 34) of the shaft has at least one reference mark (35) for detecting a start point of the translational movement and/or at least one reference mark (35') for detecting a start point for the rotational movement of the endoscopic work instrument (30).

11. Endoscopic work instrument according to Claim 10, **characterized in that** the at least one reference mark (35, 35') is formed by a highly reflective, highly absorbent or fluorescent surface region of the shaft (31) of the endoscopic work instrument (30) .

12. Endoscopic work instrument according to Claim 10 or 11, **characterized in that** the shaft (31) of the endoscopic work instrument (30) is matte at least in portions.

13. Method for capturing a movement of an endoscopic work instrument (30) in a work channel (13, 13') of a flexible endoscope (1), comprising the following steps:
- providing a flexible endoscope (1) that has at least one work channel (13, 13'),
- introducing an work instrument (30) that is usable in endoscopic fashion into an entrance (16) of the work channel (13, 13'),
- illuminating a surface (33, 34) of a shaft (31) of the work instrument (30) that is usable in endoscopic fashion by means of a light source (27, 27'),
- capturing a reflected radiation from the illuminated surface (33, 34) of the shaft (31) by means of an optical imaging sensor,
- ascertaining a movement indicator for determining a translational and a rotational movement of the work instrument (30) from the captured radiation.

14. Method for training endoscopic operations, comprising a method according to Claim 13 and the following further steps:
- transferring the measurement values of the movement indicator to a control device (40),
- producing a virtual image of an endoscopic operating scene by the control device (40) depending on the movement of the endoscopic work instrument (30) captured by the measurement values and
- displaying the virtual image for a user.

## Revendications

1. Système de simulation pour l'entraînement aux opérations endoscopiques, comprenant un dispositif d'endoscope qui présente au moins une entrée (16) pour introduire un instrument de travail endoscopique (30), au moins un dispositif de capteur (23) pour la détection d'un mouvement de l'au moins un instrument de travail endoscopique (30), un dispositif de commande (40) pour générer une image virtuelle d'une scène d'opération endoscopique en fonction d'un mouvement de l'au moins un instrument de travail endoscopique (30), des moyens de transmission pour la transmission des valeurs de mesure délivrées par le dispositif de capteur (23) au dispositif de commande (40) pour utilisation lors de la génération de l'image virtuelle et un dispositif d'affichage (41) pour afficher l'image virtuelle, caractérisé en ce le dispositif de capteur (23) comprend au moins un capteur optique qui interagit avec une surface (33, 34) éclairée par une source lumineuse (27, 27') d'une tige (31) de l'instrument de travail endoscopique (30) pour la détection du mouvement de l'instrument de travail endoscopique (30), l'au moins un capteur optique étant un capteur de représentation optique qui est conçu pour la détection de mouvements translatoires et rotatoires de l'instrument de travail endoscopique (30).

2. Système de simulation selon la revendication 1, **caractérisé en ce que** le dispositif de capteur (23) présente au moins une LED ou une source lumineuse à laser (27, 27').

3. Système de simulation selon une des revendications précédentes, **caractérisé en ce que** l'au moins un capteur optique est réalisé sous forme d'un capteur d'images et que le dispositif de capteur (23) comprend en outre des moyens de représentation pour générer une image d'une surface (33, 34) de l'instrument de travail endoscopique (30) sur un enregistreur d'images du capteur d'images.

4. Système de simulation selon une des revendications précédentes, **caractérisé en ce que** le dispositif de capteur est conçu pour détecter au moins une marque de référence sur la surface (33, 34) de la tige (31) de l'instrument de travail endoscopique (30) qui permet une constatation automatique d'un point de départ ou zéro du mouvement de l'instrument de travail (30).

5. Système de simulation selon une des revendications précédentes, **caractérisé en ce que** le dispositif de capteur est reçu dans une unité de capteur (20') qui est raccordée de manière dissociable au dispositif d'endoscope.

6. Système de simulation selon une des revendications précédentes, **caractérisé en ce que** le dispositif d'endoscope est un endoscope souple (1) doté d'une tête d'endoscope (2) et d'une tige souple étirée en longueur (4), la tige (4) présentant au moins un canal de travail (13, 13') destiné à recevoir l'instrument de travail endoscopique (30) et que l'entrée (16) d'introduction de l'instrument de travail endoscopique (30) est pratiquée dans la tige (4).

7. Système de simulation selon une des revendications précédentes, **caractérisé en ce que** le dispositif d'endoscope est un endoscope utilisable au niveau clinique.

8. Système de simulation selon une des revendications 1 à 6, **caractérisé en ce que** le dispositif d'endoscope est un endoscope d'entraînement.

9. Endoscope souple comprenant une tige étirée en longueur (4) destiné à être introduit dans une cavité, la tige présentant au moins un canal de travail (13, 13') pour l'introduction d'un instrument de travail endoscopique (30) dans la cavité, et une tête d'endoscope (2) qui présente au moins une entrée (16) pour l'introduction de l'instrument de travail endoscopique (30) dans la tige (4), **caractérisé en ce que** l'endoscope souple comprend au moins un dispositif de capteur (23) pour la détection d'un mouvement de l'au moins un instrument de travail endoscopique (30) qui comprend au moins un capteur optique qui interagit avec une surface (33, 34) éclairée par une source lumineuse (27, 27') d'une tige (31) de l'instrument de travail endoscopique (30) pour la détection du mouvement de l'instrument de travail endoscopique (30), l'au moins un capteur optique étant un capteur de représentation optique qui est conçu pour la détection de mouvements translatoires et rotatoires de l'instrument de travail endoscopique (30).

10. Instrument de travail endoscopique (30) destiné à être utilisé avec un système de simulation ou un endoscope souple (1) selon une des revendications précédentes, comportant une tige étirée en longueur, **caractérisé en ce qu'**une surface (33, 34) de la tige présente au moins une marque de référence (35) pour la détection d'un point de départ du mouvement translatoire et/ou au moins une marque de référence (35') pour la détection d'un point de départ pour le mouvement rotatoire de l'instrument de travail endoscopique (30).

11. Instrument de travail endoscopique selon la revendication 10, **caractérisé en ce que** l'au moins une marque de référence (35, 35') est constituée par une zone surfacique très réfléchissante, très absorbante ou fluorescente de la tige (31) de l'instrument de travail endoscopique (30).

12. Instrument de travail endoscopique selon la revendication 10 ou 11, **caractérisé en ce que** la tige (31) de l'instrument de travail endoscopique (30) est au moins mate par endroits.

13. Procédé de détection d'un mouvement d'un instrument de travail endoscopique (30) dans un canal de travail (13, 13') d'un endoscope souple (1), comprenant les étapes suivantes :
- mise à disposition d'un endoscope souple (1) qui présente au moins un canal de travail (13, 13'),
- introduction d'un instrument de travail utilisable pour l'endoscopie (30) dans une entrée (16) du canal de travail (13, 13'),
- éclairage d'une surface (33,34) d'une tige (31) de l'instrument de travail utilisable pour l'endoscopie (30) au moyen d'une source lumineuse (27, 27'),
- détection d'un rayonnement réfléchi de la surface éclairée (33, 34) de la tige (31) au moyen d'un capteur de représentation optique,
- détermination d'un indicateur de mouvement pour la définition d'un mouvement translatoire et rotatoire de l'instrument de travail (30) à partir du rayonnement détecté.

14. Procédé d'entraînement aux opérations endoscopiques, comprenant un procédé selon la revendication 13 et les autres étapes suivantes :
- transmission des valeurs de mesure de l'indicateur de mouvement à un dispositif de commande (40),
- génération d'une image virtuelle d'une scène d'opération endoscopique par le dispositif de commande (40) en fonction du mouvement enregistré par les valeurs de mesure de l'instrument de travail endoscopique (30) et
- affichage de l'image virtuelle pour un utilisateur.
